# EUROPEAN PATENT APPLICATION

(11) **EP 4 390 590 A1**
(43) Date of publication of application: **26.06.2024**
(21) Application number: 23216509.2
(22) Date of filing: 14.12.2023
(51) Int. Cl.: G05B 19/418, B29C 53/38

(54) **A COMPUTER IMPLEMENTED METHOD FOR SECURE TRANSMISSION OF A DATA MESSAGE FROM A SOURCE NODE TO A TARGET NODE**

(30) Priority: 20.12.2022 IT 202200026103
(71) Applicant: Tetra Laval Holdings & Finance S.A., 1009 Pully (CH)
(72) Inventor: Verasani, Mattia, 41123 Modena (IT); Maltoni, Luca, 41123 Modena (IT); Arena, Marco, 41123 Modena (IT); Brehas, Alessandro, 41123 Modena (IT); Carulli, Paola, 41123 Modena (IT); Montanari, Alessandro, 41123 Modena (IT)
(74) Representative: Tetra Pak - Patent Attorneys SE

(57) **Abstract**

The present invention relates to a method (100) for quality control of packages produced in a roll-fed packaging machine. The method (100) comprising a series of recurring steps, said series of recurring steps comprising: obtaining (S102), from an image data capturing device, image data depicting at least a portion of a package; in response to the roll-fed packaging machine being in an autonomous mode: determining (S106) a quality measurement of the package by inputting the image data into a machine learning model, such as a neural network; determining (S108) an action to be performed, based on the determined quality measurement; communicating (S110) the action to a control system of the roll-fed packaging machine; determining (S112) a performance metric of the machine learning model based on the quality measurement of the package and quality measurements of previously assessed packages; and assigning (S114) the mode of the roll-fed packaging machine to a re-training mode if the performance metric is outside a performance metric interval; in response to the roll-fed packaging machine being in the re-training mode: collecting (S116) the image data as training data for the machine learning model, re-training (S118) the machine learning model using the training data, and assigning (S120) the mode of the roll-fed packaging machine to the autonomous mode.

## Description

### Technical field

The present invention relates to the field of packaging technology. More particularly, it is related to a methods and apparatuses for quality control of packages produced in a roll-fed packaging machine as well as a food production system thereof.

### Background of the invention

Within the food industry today, the food package technology plays an important part. The food package has several important functions. Apart from branding of the product and presenting the customers with information, the food package also has an important role of ensuring food safety. The packaging materials used in the food package can be designed to provide strength and stability, so that the packages are not damaged during transportation. Furthermore, the packaging materials can form a protective environment for the food product so that it is protected from for example bacteria, germs, oxygen and sun light, thus prolonging shelf life. However, the packaging material is not the only thing that is important in the package. The package needs also to be sealed properly. Any damages to the packaging material or errors in the sealing can result in a breach of the protective environment. In a roll-fed packaging system for instance, the packages is made by forming a longitudinal sealing along an overlap between two ends of the packaging material such that a tube is formed. Thereafter, the packages can be formed from the tube by making a top and bottom transversal sealing.

There are thus many aspects of the food package which are important. Ensuring the quality of food packages produced in packaging machines is not an easy task. Today, a common way of doing this is to evaluate batches of the finished products manually. In addition to visually examining the exterior of the package, this also means opening packages to assess the sealing formed on the inside of the package. However, this is a tedious task which also leads to waste of product. Further, to ensure the quality, large quantities of packages has to be assessed. It is therefore a need for an improved way of quality control of packages produced in packaging machines.

### Summary of the invention

The herein disclosed technology seeks to at least partly mitigate, alleviate or eliminate one or more of the above-mentioned deficiencies and disadvantages in the prior art. In particular, it is an object to provide a method and apparatus for quality control of packages produced in a roll-fed packaging machine.

The inventors of the present inventive concept have realized a new and improved way of evaluating the quality of packages utilizing machine learning. The present inventive concept further provides for continuously monitoring of the packages such that a higher confidence in the package quality can be achieved, compared to today's methods of evaluating samples manually. It further allows actions to be taken at an early stage, which can lead to a reduction of wasted product.

Various aspects and embodiments of the disclosed invention are defined below and in the accompanying independent and dependent claims.

According to a first aspect, there is provided a method for quality control of packages produced in a roll-fed packaging machine. The method comprises a series of recurring steps. Said series of recurring steps comprises: obtaining, from an image data capturing device, image data depicting at least a portion of a package; in response to the roll-fed packaging machine being in an autonomous mode: determining a quality measurement of the package by inputting the image data into a machine learning model, such as a neural network; determining an action to be performed, based on the determined quality measurement; communicating the action to a control system of the roll-fed packaging machine; determining a performance metric of the machine learning model based on the quality measurement of the package and quality measurements of previously assessed packages; and assigning the mode of the roll-fed packaging machine to a re-training mode if the performance metric is outside a performance metric interval; in response to the roll-fed packaging machine being in the re-training mode: collecting the image data as training data for the machine learning model, re-training the machine learning model using the training data, and assigning the mode of the roll-fed packaging machine to the autonomous mode.

The machine learning model may be a deep learning model. The deep learning model should be understood to be a model based on deep learning. Deep learning should be understood to be machine learning in which hypotheses take the form of complex algebraic circuits with tunable connection strengths. The word "deep" refers to the fact that the circuits are typically organized into many layers, which means that computation paths from inputs to outputs have many steps.

By the wording "quality control" it is herein meant an evaluation of one or more quality aspects of the package. A quality aspect may be related to food safety, such as looking for any damages to the package or package material or deficiency or anomaly in the forming of the package (e.g. in sealing or folding the package). Another quality aspect may be related to aesthetics of the package, such as looking for any deformations in the package (which also could be related to food safety) or misprints/misalignment in the decor of the package.

By the wording "produced" as in "produced in a roll-fed packaging machine", it is herein meant that the package either has been produced, or is being produced in the roll-fed packaging machine.

The method can be repeated (i.e. by performing the series of recurring steps multiple times) in order to continuously perform the quality control on subsequent packages. Thus, it should be noted that the obtained image data in each iteration can depict different portions of the same package. Alternatively, the obtained image data can depict a different package than during the previous iteration. Put differently, the method 100 may be performed for a number of subsequently produced packages. Further, the package may be depicted in the image data in any state during the production process. For example, the image data may depict the package in an unformed state (e.g. as a web of packaging material), in a partly formed state (e.g. when formed as a tube), or in a completely formed state (e.g. as a finished package), or anything there between.

By the wording "autonomous mode", it is herein meant a mode in which the quality control in the roll-fed packaging machine is performed automatically, by use of the machine learning model, and independently of any operator input. The roll-fed packaging machine may be in the autonomous mode as long as the machine learning model fulfils certain requirements (i.e. based on the performance metric). With time, and as new scenarios (e.g. new types of deficiencies) appear, the performance of the machine learning model may deteriorate. To mitigate this, the re-training mode of the roll-fed packaging machine can be utilized. The wording "re-training mode" is herein meant to be understood as a mode when the machine learning model is being re-trained on new scenarios. In other words, the machine model is monitored to detect whether it starts to deviate from its expected behavior. If that is the case, collection of data needed to re-train the machine learning model can be automatically triggered. After being re-trained, the machine learning model can again be deployed, and the roll-fed packaging machine again be set in autonomous mode. A possible associated advantage may thus be that it allows for a continuous inspection of the packages, as well as a continuous learning system of the machine learning model which may be able to identify new or never before seen defects in the packages. Put differently, while the machine learning model performs as it should, it may be allowed to run. If it deteriorates, it may be stopped from running and re-trained instead. In addition, by continuously monitoring the quality measurement of the packages, it may be possible to detect if any components in the packaging machine starts to deteriorates (i.e. if the quality measurement starts to deteriorate). This may be advantageous in that it allows preventive measures to be performed, such as replacing the component, before it fails completely.

Further, by having the machine learning model re-trained when its performance is not good enough or when new scenarios appear, allows it to handle new packaging material or food products which may lead to changes in how the quality assessment is to be performed. As an example, if the packaging material in the packaging machine is changed, e.g. to a thicker material to produce a different type of food package, any potential deficiencies in the package may look different compared to when another packaging material is used. For this, the machine learning model may adjust itself when needed for being able to deal with a wide range of scenarios.

As a more concrete example, the proposed method may allow a "generally" trained machine learning model to be deployed in different types of packaging machines, with different types of packaging material and food product. The machine learning may then learn (i.e. be re-trained) for the specific machine it is deployed in to reach a desired performance. This may be advantageous in that it can simplify the training process, as the machine learning model need not to be trained for its unique application, which would require time and computational resources, as well as collecting a lot of data unique for each situation. Instead, the "general purpose" machine learning model can be trained once using the same training data, before it is deployed in a packaging machine where it can be re-trained for the specific case.

The package may comprise a carton layer and at least one plastic layer.

The image data may depict a longitudinal sealing of the package. The determined quality measurement may be a quality measurement of the longitudinal sealing.

The longitudinal sealing may be formed by forming a tube of a web of packaging material such that a first longitudinal edge section of the web overlaps a second longitudinal edge section of the web, attaching the first and second longitudinal edge sections, and applying a protective strip to the overlap between the first and second longitudinal edge sections on an inside of the tube. The image data of the longitudinal sealing may be captured by the image data capturing device from the inside of the tube.

The action may be any one of (i) rejecting or accepting the package, (ii) sending a warning signal to an operator of the packaging machine, (iii) stopping the packaging machine and (iv) adjusting settings of the packaging machine. By having a reject or accept action, deficient packages can automatically be discarded based on the quality measurement. A warning signal may be sent to the operator e.g. if it is detected that the quality of the packages starts to deteriorate. This may be an early sign of that something in the packaging machine is not correct, e.g. that a part in the machine soon needs to be replaced. Sending a warning to the operator allows him/her to go through the packaging machine to identify any potential problems early on. Stopping the packaging machine may be performed in case a more severe deficiency is detected in a (or several) package(s) which potentially could lead to a lot of deficient packages. If instead the deficiency is less severe, settings of the packaging machine may be adjusted to correct the errors.

The action may be to accept or reject the package. Communicating the action may comprise communicating the action to a package reject unit arranged downstream of the packaging machine.

The action may be to accept or reject the package. When the roll-fed packaging machine is in the re-training mode, the method may further comprise instructing a secondary reject system to perform a quality assessment of the package. The secondary reject system may e.g. be a manual quality control performed by a user, or any other quality control system based on which the packages can be either accepted or rejected.

The performance metric may be determined based on a number of false positives and a number of false negatives of previously assessed packages. The performance metric may thus be determined by looking at a plurality of subsequent packages having been assessed.

The method may further comprise adjusting settings of the roll-fed packaging machine based on the determined quality measurement. Preferably, the settings may be adjusted by increasing or decreasing a heating temperature and/or increasing or decreasing an electricity amount during a forming of the longitudinal sealing.

The image data may be associated with identification data of the package. Communicating the action to the control system may further comprise communicating the identification data to the control system. The identification data may be used by the control system to know which package the action relates to.

The mode of the roll-fed packaging machine may be assigned to the re-training mode if the performance metric decreases over a number of consecutively assessed packages. If the performance metric continuously decreases, this may be an indication of that something in the machine learning model is not working as it should, or that the image data depicts things in the package which the machine learning model is not trained to assess.

The performance metric may comprise a number of sub-metrics. The method may further comprise: in response to a sub-metric being outside a corresponding sub-metric interval: generating a task associated with the sub-metric, wherein the task comprises the image data and settings of the roll-fed packaging machine, and sending the task to a user group associated with the sub-metric; receiving, in response to said task from the user group, updated settings for the roll-fed packaging machine, and adjusting the settings of the roll-fed packaging machine in accordance with the updated settings. Utilizing the sub-groups may allow the user group which is best suited for evaluating the image data, or more specifically, the deficiencies of the package present in the image data.

According to a second aspect, there is provided a quality control apparatus for quality control of packages produced in a roll-fed packaging machine. The quality control apparatus comprises circuitry configured to execute: an obtaining function configured to obtain, from an image data capturing device, image data depicting at least a portion of a package. In response to the roll-fed packaging machine being in an autonomous mode, the circuitry is further configured to execute: a first determining function configured to determine a quality measurement of the package by inputting the image data into a machine learning model, such as a neural network; a second determining function configured to determine an action to be performed, based on the quality measurement, a communication function configured to communicate the action to a control system of the roll-fed packaging machine, a third determining function configured to determine a performance metric of the machine learning model based on the quality measurement of the package and quality measurements of previously assessed packages, and, a first assigning function configured to assign the mode of the roll-fed packaging machine to a re-training mode if the performance metric is outside a performance metric interval. In response to the roll-fed packaging machine being in the re-training mode, the circuitry is further configured to execute: a re-training function configured to collect the image data as training data for the machine learning model and re-training the machine learning model using the training data, and a second assigning function configured to assign the mode of the roll-fed packaging machine to the autonomous mode.

The above-mentioned features of the first aspect, when applicable, apply to this second aspect as well. In order to avoid undue repetition, reference is made to the above.

According to a third aspect, there is provided a food production system. The food production system comprises: a roll-fed packaging machine configured to produce the packages; an image data capturing device arranged in the roll-fed packaging machine to capture image data depicting at least a portion of a package; and a quality control apparatus for quality control of packages produced in the roll-fed packaging machine according to the second aspect.

The above-mentioned features of the first and second aspect, when applicable, apply to this third aspect as well. In order to avoid undue repetition, reference is made to the above.

According to a fourth aspect, there is provided a non-transitory computer-readable storage medium. The non-transitory computer-readable storage medium stores one or more programs configured to be executed by one or more processors of a processing system, the one or more programs comprising instructions for performing the method according to the first aspect.

The above-mentioned features of the first aspect, when applicable, apply to this fourth aspect as well. In order to avoid undue repetition, reference is made to the above.

According to a fifth aspect, there is provided a computer program product. The computer program product comprises instructions which, when the program is executed by a computer, cause the computer to carry out the steps of the method of the first aspect.

The above-mentioned features of the first aspect, when applicable, apply to this fifth aspect as well. In order to avoid undue repetition, reference is made to the above.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

Hence, it is to be understood that this inventive concept is not limited to the particular steps of the methods described or component parts of the systems described as such method and system may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a device" or "the device" may include several devices, and the like. Furthermore, the words "comprising", "including", "containing" and similar wordings do not exclude other elements or steps.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Figure 1 is a flow chart illustrating the steps of a method for quality control of packages produced in a roll-fed packaging machine.
Figure 2 schematically illustrates a quality control apparatus.
Figure 3 illustrates, by way of example, a food production system comprising a quality control apparatus.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

It will also be appreciated that when the present disclosure is described in terms of a method, it may also be embodied in an apparatus or device comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for the purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

It will also be understood that, although the term first, second, etc. may be used herein to describe various elements or features, these elements should not be limited by these terms. These terms are only used to distinguish one element from another. For example, a first function could be termed a second function, and, similarly, a second function could be termed a first function, without departing from the scope of the embodiments. The first function and the second function are both functions, but they are not the same function.

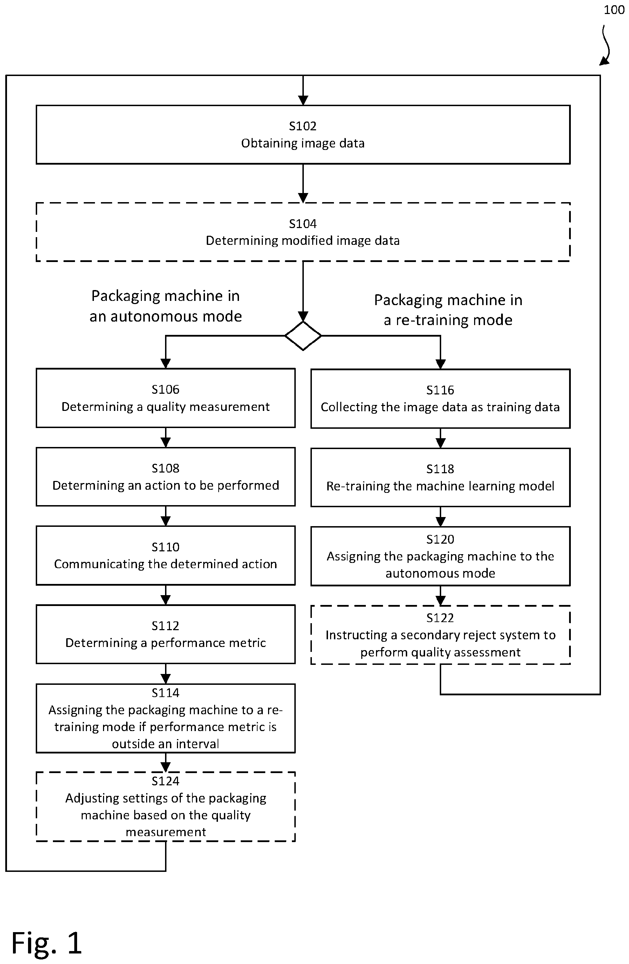

A method for quality control of packages produced in a roll-fed packaging machine, as well as a quality control apparatus and food production system thereof will now be described with reference to Fig. 1 to Fig. 3.

Fig. 1 is a flow chart illustrating the steps of a method 100 for quality control of packages produced in a roll-fed packaging machine. The packages may be carton based packages containing food products. The packages may comprise a carton layer and at least one plastic layer. When producing packages in a roll-fed packaging machine a tube filled with food product can be formed. From a lower end of the tube, packages can be continuously formed. An effect of having such tube is that the packages formed are interlinked and a quality issue detected in a previous package may thus be relevant to take into account when assessing a current package. The same situation may not occur when having a blanks-fed system forming packages based on blanks (i.e. pre-made sleeves of packaging material) or a PET bottling system using pre-forms. Even though the link between consecutive packages can be stronger in the roll-fed packaging machine, the principles described herein may also be used for blanks-fed packaging machines or PET bottling systems. In these two systems the link between consecutive packages may instead be related to changed settings of the machine or that a machine part is detonating successively.

Fig. 1 illustrates a preferred variant of the method 100. In addition, a number of optional steps of the method 100, forming a number of alternative embodiments, is shown in broken lines.

The method 100 comprises a number of recurring steps. Put differently, the method 100 may be repeated for a number of subsequent packages produced in the roll-fed packaging machine. By recursively performing the method 100, it can be possible to monitor the performance of the machine learning model (further described below) to detect if it starts to drift off in performance. In the following, the different steps are described in more detail with reference to Fig. 1. Even though illustrated in a specific order, the steps of the method 100 may be performed in any suitable order, in parallel, as well as multiple times.

Image data depicting at least a portion of a package is obtained S102, from an image data capturing device. The package herein refers to a package being produced or which has been produced in the roll-fed packaging machine, and which is currently evaluated in regards to quality. The package may thus be evaluated in any stage during the production process. Hence, the image data may depict the package in an unformed state (e.g. as a web of packaging material), in a partly formed state (e.g. in a tubular form), or in a completely formed state (e.g. as a finished package).

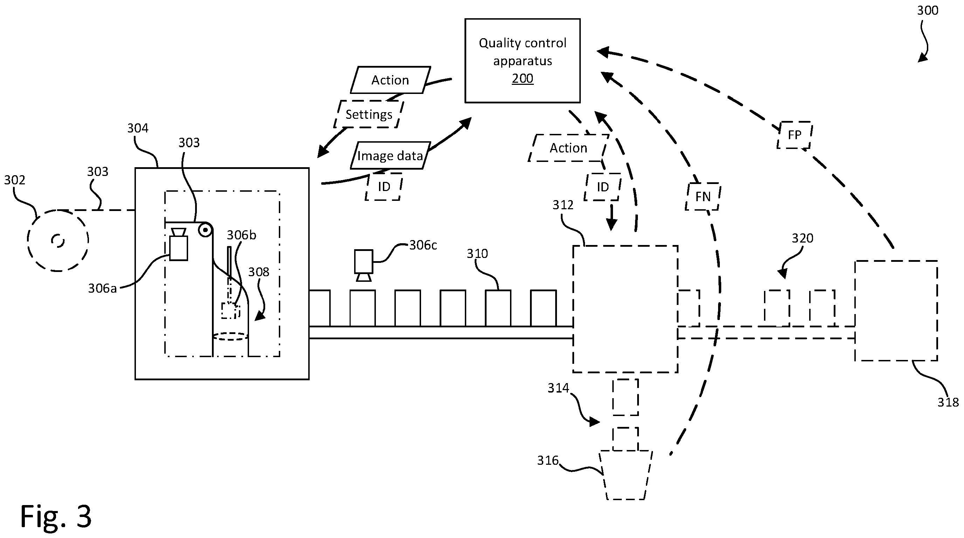

The image data may depict a portion of the package which is relevant for the quality control to be performed of the package. In one example, the image data may depict a longitudinal sealing of the package. The later on determined quality measurement (see below) may thus be a quality measurement of the longitudinal sealing. In roll-fed packaging machines, such as the Tetra Brik^{™} system marketed by Tetra Pak^{™}, the longitudinal sealing is formed to merge two edge sections of the package material to form a tube. The tube can then be filled with food product and then closed up by a top and bottom transversal sealing. More specifically, the longitudinal sealing can be formed by forming a tube of a web of packaging material such that a first longitudinal edge section of the web overlaps a second longitudinal edge section of the web, attaching the first and second longitudinal edge sections, and applying a protective strip to the overlap between the first and second longitudinal edge sections on an inside of the tube. The longitudinal sealing can be critical part of ensuring food safety of the package. Image data depicting the longitudinal sealing may be captured by the image data capturing device from the inside of the tube. In other words, image data capturing device can be arranged within the tube, as will be further discussed in connection with Fig. 3.

However, the image data may depict other portions of the package as well, such as a sidewall, a top or a bottom of the package, or of the web of packaging material. The image data may depict the entire package.

The image data may comprise a single frame of the package. Alternatively, the image data may comprise a series of frames of the package. Put differently, the image data may comprise a plurality of subsequent frames. As an example, the image data may comprise 20 to 40 frames of the package. More specifically, the image data may comprise 32 subsequent frames of the package.

The image data capturing device may be a camera configured to capture images of the package. Alternatively, the image capturing device may comprise a plurality of cameras, where each camera may be configured to capture images of different portions of the package. In such case, the obtained image data may comprise a plurality of images of the package captured by the plurality of cameras. The plurality of images may be merged to form a single image, before being used in a subsequent step of the method 100.

Moving on, in response to the roll-fed packaging machine being in an autonomous mode a quality measurement of the package is determined S106, by inputting the image data into a machine learning model. The machine learning model may be a neural network such as a convolutional neural network. The machine learning model may be trained to output a predicted quality measurement based on inputted image data. The machine learning model may be trained using supervised leaning. In other words, the machine learning model may be trained based on image data with a known associated quality measurement.

The quality measurement may be a range of continuous values such as a range between 0 and 1. Alternatively, the quality measurement may be discrete set of values. In terms of any deficiencies in the package, the value of the quality measurement may be indicative of a severity of the detected deficiency. Alternatively, the quality measurement may be a binary value, such as either "OK" or "Not OK". The quality measurement may further comprise information indicative of what type of deficiency the package has (if any). The information indicative of a type of deficiency may for instance be that the longitudinal sealing is formed incorrectly, or that the packaging material is damaged, both of which may lead to an unsterile package. The quality measurement may further indicate a confidence score of the output from the machine learning model, e.g. how confident the machine learning model is that a detected deficiency actually is a deficiency.

The method 100 may further comprise, prior to determining S106 the quality measurement, determining S104 modified image data by inputting the image data into an image pre-processing module. Determining S106 the quality measurement of the package may then be performed by inputting the modified image data into the machine learning model. In other words, the pre-processing module may perform one or more pre-processing steps on the image data to form the modified image data. The one or more pre-processing steps may include, but are not limited to, reshaping, normalization and/or cropping of the image data.

Further, an action to be performed is determined S108, based on the determined quality measurement. The action may be any one of (i) rejecting or accepting the package, (ii) sending a warning signal to an operator of the packaging machine, (iii) stopping the packaging machine and (iv) adjusting settings of the packaging machine. It should be noted that more than one action may be determined to be performed. As one example, the package may be rejected, and settings of the packaging machine may be adjusted.

The action to be performed may for instance be determined by comparing the quality measurement to one or more threshold values to determine whether the package fulfils the quality control or not, and what action is to be performed. As a non-limiting example, if the quality measurement exceeds a first threshold (e.g. indicative of minor deficiency), the action of sending a warning signal to an operator may be determined. If the quality measurement exceeds a second threshold (e.g. indicating a deficiency which could compromise food safety), the action of rejecting the package may be determined. Lastly, if the quality measurement exceeds a third threshold (e.g. indicating a major deficiency), the action of stopping the packaging machine may be determined. As stated above, also information indicative of what type of deficiency it is may be uses in determining the action to be performed. For example, if it is concluded that the longitudinal sealing is not properly applied, the action of adjusting settings of the packaging machine may be determined as the action to be performed.

Further, the action is communicated S110 to a control system of the roll-fed packaging machine. The control system of the roll-fed packaging machine may then execute the action. In case the action is to accept or reject the package, the action may be communicated to a package reject unit arranged downstream of the roll-fed packaging machine. Alternatively, the control system of the roll-fed packaging machine may instruct the package reject unit to discard the package.

The image data may be associated with identification data of the package. The identification data may be printed on the package, e.g. as a two dimensional code (such as a barcode or QR code), or as a unique ID number. The identification data may be depicted in the image data of the package and extracted therefrom. Alternatively, the identification data may be read e.g. by a scanner. Alternatively, the identification data may be provided in a tag, such as an RFID or NFC tag, and be obtained by an RFID or NFC tag reader. Communicating S110 the action to the control system may further comprise communicating the identification data to the control system. Thus, the control system can know which package the action is associated with.

Further, a performance metric of the machine learning model is determined S112, based on the quality measurement of the package and quality measurements of on previously assessed packages. By the wording "previously assessed packages" it is herein meant either packages which the machine learning model has seen during training, or packages which the machine learning model has assessed in the roll-fed packaging machine previous to the package currently being assessed. The performance metric should be understood as a measure of how well the machine learning model performs on the image data. The performance metric may be determined S112 based on a number of false positives and a number of false negatives of previously assessed packages. Alternatively, the performance metric may be based on a percentage of false positives and the percentage of false negatives in a batch of previously assessed packages. The performance metric may be a precision and/or recall based on the number of false positives and the number of false negatives. As another example, the performance metric may be a so called F1-score. Using the F1-score as performance metric may be advantageous since there may be an imbalance in the data set, i.e. there are typically a large number of "good" packages, and very few "bad" packages.

The performance metric may be indicative of a distribution of the outputted quality measurement (i.e. an inference score). More specifically, in case the image data comprises a number of subsequent frames of the package, the distribution of the inference score over the number of subsequent frames may be determined as the performance metric. The distribution may be compared to a distribution of inference score over a training set of data used when training the machine learning model. If the distribution of the image data deviates from the distribution of the training set more than a certain amount, it may indicate that the machine learning model needs to be retrained. A reason for change in distribution of the inference score may indicated that the image data depicts new types of deficiencies of the package which the machine learning model has not seen during training. Alternatively, or in combination with the above, the performance metric may be indicative of how the quality measurement changes over time (i.e. over a sequence of evaluated packages). If the quality measurement drastically increases or decreases over time, it may indicate that the machine learning model needs to be retrained.

The performance metric may comprise a number of sub-metrics. The sub-metrics may relate to different quality aspects of the package. For example, a sub-metric may be related to a longitudinal sealing of the package, a transversal sealing of the package, a décor of the package etc. The method 100 may further comprise, in response to a sub-metric being outside a corresponding sub-metric interval: generate a task associated with the sub-metric, wherein the task comprises the image data and settings of the roll-fed packaging machine, and sending the task to a user group associated with the sub-metric. The user group may be a team of experts in the corresponding quality aspect. The method 100 may further comprise receiving, in response to said task, from the user group, updated settings for the roll-fed packaging machine. The updated settings may thus be determined by the user group in order to mitigate a reason of the deficient quality aspect. The method 100 may further comprise adjusting the settings of the roll-fed packaging machine in accordance with the updated settings.

Further, the mode of the roll-fed packaging machine is assigned S114 to a re-training mode if the performance metric is outside a performance metric interval. The performance metric interval may be interpreted as an operating window in which the machine learning model is allowed to perform the quality control. By monitoring whether the performance metric of the machine learning model is within the performance metric interval, it can be detected whenever it deteriorates so much that the quality control cannot longer be relied upon.

Alternatively, the roll-fed packaging machine may be assigned S114 to the re-training mode if the performance metric deteriorated over a number of consecutively assessed packaged (i.e. over a number of consecutive iterations).

In response to the roll-fed packaging machine being in the re-training mode, the image data is collected S116 as training data for the machine learning model. The image data which caused the performance metric of the machine learning model to be outside the performance metric interval may be particularly useful as training data as it may indicate that it comprises new cases which the machine learning model hasn't seen before. The roll-fed packaging machine may remain in re-training mode over a number of recurring iterations of the method 100, i.e. for a number of produced packages. While in re-training mode, the image data of any package which passes by the image data capturing device may be collected as training data.

Further, the machine learning model is re-trained S118 using the training data. The machine learning model may be re-trained until the machine learning model reaches a certain performance level (e.g. a certain level of precision, recall and/or F1-score). As an example, the machine learning model may be re-trained until it reaches a precision above 95% and a recall above 80%. As another example, the machine learning model may be re-trained until it reaches an F1-score above a certain threshold. As another example, the machine learning model may be re-trained until a distribution of the inference score is within a certain amount of the distribution of the inference score of an original training set used when first training the machine learning model.

Further, the mode of the roll-fed packaging machine is assigned S120 to the autonomous mode. The roll-fed packaging machine is assigned to the autonomous mode when the re-training of the machine learning model has been completed.

During a time when the roll-fed packaging machine is in re-training mode, and wherein the action is to accept or reject the package, the method 100 may further comprise instructing S122 a secondary reject system to perform a quality assessment of the package. The secondary reject system may for example be a manual quality control performed by a user. Even though the roll-fed packaging machine is in re-training mode, the image data depicting at least a portion of the package may still be obtained and communicated to the secondary reject system.

Optionally, the method 100 may further comprise adjusting S124 settings of the roll-fed packaging machine based on the determined quality measurement. In case the longitudinal sealing of the package is evaluated, adjusting S124 the settings of the roll-fed packaging machine is preferably performed by increasing or decreasing a heating temperature and/or increasing or decreasing an electricity amount during a forming of the longitudinal sealing.

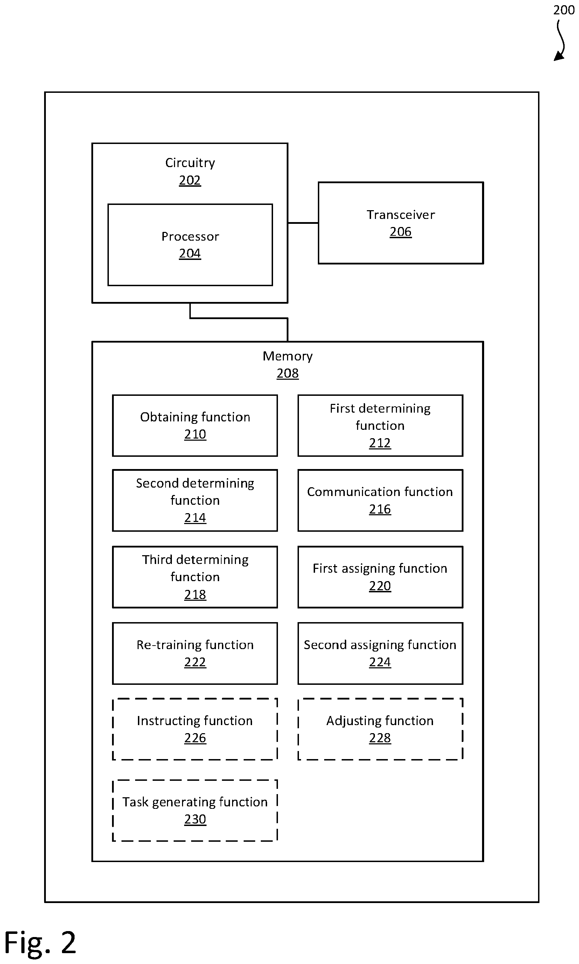

Fig. 2 is a schematic illustration of a quality control apparatus 200 of the present inventive concept. The quality control apparatus 200 is configured to perform quality control of packages produced in a roll-fed packaging machine. In particular, the quality control apparatus 200 is configured to perform the method 100 as described above in connection with Fig. 1. Any aspects or advantages described above in connection with the method 100 applies to the quality control apparatus 200 as described below, and vice versa. The quality control apparatus 200 may be provided as an integral part of the roll-fed packaging machine. More specifically, the quality control apparatus 200 may be part of a control system of the roll-fed packaging machine. Alternatively, the quality control apparatus 200 may be provided externally to the roll-fed packaging machine. In such case, the quality control apparatus 200 may be communicatively connected to the roll-fed packaging machine.

The quality control apparatus 200 comprises circuitry 202. The circuitry 202 may physically comprise one single circuitry device. Alternatively, the circuitry 202 may be distributed over several circuitry devices. As shown in the example of Fig. 2, the quality control apparatus 200 may further comprise a transceiver 206 and a memory 208. The circuitry 202 being communicatively connected to the transceiver 206 and the memory 208. The circuitry 202 may comprise a data bus (not illustrated in Fig. 2), and the circuitry 202 may communicate with the transceiver 206 and/or the memory 208 via the data bus.

The circuitry 202 may be configured to carry out overall control of functions and operations of the quality control apparatus 200. The circuitry 202 may include a processor 204, such as a central processing unit (CPU), microcontroller, or microprocessor. The processor 204 may be configured to execute program code stored in the memory 208, in order to carry out functions and operations of the quality control apparatus 200.

The transceiver 206 may be configured to enable the quality control apparatus 200 to communicate with other devices or apparatuses. For example, the quality control apparatus 200 may be communicatively connected to a control system of the roll-fed packaging machine, e.g. by the transceiver 206. In another example, the quality control device 200 may be communicatively connected to an image data capturing device, e.g. by the transceiver 206. The transceiver 206 may both transmit data from and receive data to the quality control apparatus 200. The transceiver 206 may communicate over wired or wireless communication protocols (e.g. Bluetooth, Wi-Fi, cellular communication etc.).

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the quality control apparatus 200. The memory 208 may exchange data with the circuitry 202 over the data bus. Accompanying control lines and an address bus between the memory 208 and the circuitry 202 also may be present.

Even though not explicitly illustrated in Fig. 2, the quality control apparatus 200 may comprise input devices such as one or more of a keyboard, a mouse, and a touchscreen. A user input may for instance be used in collecting image data as training data as will be further described below. The user may provide a user input as a label of the image data. The user input may thus function as feedback to the method or quality control apparatus for improving the performance. The quality control apparatus 200 may further comprise a display for providing output to the user, such as the captured image data.

Functions and operations of the quality control apparatus 200 may be implemented in the form of executable logic routines (e.g., lines of code, software programs, etc.) that are stored on a non-transitory computer readable recording medium (e.g., the memory 208) of the quality control apparatus 200 and are executed by the circuitry 202 (e.g. using the processor 204). Put differently, when it is stated that the circuitry 202 is configured to perform a specific operation, or execute a specific function, the processor 204 of the circuitry 202 may be configured execute program code portions stored on the memory 208, wherein the stored program code portions correspond to the specific operation or function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. The following operations may be performed by the quality control apparatus 200, and may be stored as functions on a non-transitory computer readable recording medium. An obtaining function 210, a first determining function 212, a second determining function 214, a communication function 216, a third determining function 218, a first assigning function 220, a re-training function 222 and a second assigning function 224. The first, second and third determining functions 212, 214, 218 may be implemented as a common determining function. Similarly, the first and second assigning function 220, 224 may be implemented as a common assigning function. The first determining function 212, the second determining function 214, the communication function 216, the third determining function 218 and the first assigning function 220 are executed, by the circuitry 202 in response to the roll-fed packaging machine being in an autonomous mode. In other words, said functions may be repeatedly executed as long as the roll-fed packaging machine is in the autonomous mode to autonomously assess the quality of the packages. The re-training function 222 and the second assigning function 224 is executed, by the circuitry 202, in response to the roll-fed packaging machine being in a re-training mode.

The obtaining function 210, the first determining function 212, the second determining function 214 and the communication function 216 may be seen as a quality assessment module of the quality control apparatus 200. The quality control module may be tasked with assessing different quality aspects of the packages and in response to this, determine an action to take. The third determining function 218, the first assigning function 220, the re-training function 222 and the second assigning function 224 may be seen as a drift module of the quality control apparatus 200. The drift module may be tasked with monitoring the performance and working conditions of the machine learning model in order to detect if the situation changes (e.g. if the performance of the machine learning model deteriorates, or if new types of input data starts to appear). Thus, the proposed quality control apparatus 200 provides a robust and effective way of performing quality assessment of packages in the roll-fed packaging machine. The same holds for the method 100 and the corresponding method steps.

The circuitry 202 may be further configured to execute an instructing function 226, an adjusting function 228 and/or a task generating function 230.

The obtaining function 210 is configured to obtain, from an image data capturing device, image data depicting at least a portion of a package. The obtaining function may obtain the image data in response to sending an instruction signal to the image data capturing device to capture the image data. Alternatively, the image data capturing device may be comprised in the quality control apparatus 200. As stated above in connection with Fig. 1, the image data may depict a longitudinal sealing of the package. The determined quality measurement may thus be a quality measurement of the longitudinal sealing.

The first determining function 212 is configured to determine a quality measurement of the package by inputting the image data into a machine learning model, such as a neural network. The machine learning model may be provided in a machine learning module of the quality control device 200. Alternatively, the machine learning model may be provided in a remote server, such as in the cloud.

The second determining function 214 is configured to determine an action to be performed, based on the quality measurement. The action may be any one of (i) rejecting or accepting the package, (ii) sending a warning signal to an operator of the packaging machine, (iii) stopping the packaging machine and (iv) adjusting settings of the packaging machine.

The communication function 216 is configured to communicate the action to a control system of the roll-fed packaging machine. The communication function 216 may be configured to communicated the action to a package reject unit arranged downstream of the roll-fed packaging machine. The communication function 216 may be further configured to communicate identification data of the package associated with the image data, together with the action.

The third determining function 218 is configured to determine a performance metric of the machine learning model based on the quality measurement of the package and quality measurements of previously assessed packages. The performance metric may be determined as described above in connection with Fig. 1.

The first assigning function 220 is configured to assign the mode of the roll-fed packaging machine to a re-training mode if the performance metric is outside a performance metric interval. Assigning of the roll-fed packaging machine to the re-training mode is further described above in connection with Fig. 1.

The re-training function 222 is configured to collect the image data as training data for the machine learning model and re-training the machine learning model using the training data.

The second assigning function 224 is configured to assign the mode of the roll-fed packaging machine to the autonomous mode. As described above in connection with Fig. 1, the roll-fed packaging machine may be assigned to the autonomous mode upon the re-training of the machine learning model is complete.

The instructing function 226 may be configured to instruct a secondary reject system to perform a quality assessment of the package. The instructing function 226 may be executed in response to the roll-fed packaging machine being in the re-training mode.

The adjusting function 228 may be configured to adjust settings of the roll-fed packaging machine based on the determined quality measurement. For instance, in case the longitudinal sealing is assessed, the settings may be adjusted by increasing or decreasing a heating temperature and/or increasing or decreasing an electricity amount during a forming of the longitudinal sealing.

The performance metric may comprise a number of sub-metrics. The task generating function 230 may be configured to, in response to a sub-metric being outside a corresponding sub-metric interval: generate a task associated with the sub-metric, and sending the task to a user group associated with the sub-metric. The task may comprise the image data and settings of the roll-fed packaging machine used when producing the associated package. The task generating function 230 may further be configured to receive, in response to said task, from the user group, updated settings for the roll-fed packaging machine. The task generating function 230 may be further configured to adjust the settings of the roll-fed packaging machine in accordance with the updated settings.

It should be noted that features, aspects and advantages of the method 100 as described above in connection with Fig. 1, are applicable also to the quality control apparatus 200 described herein. To avoid undue repetition, reference is made to the above.

Figure 3 generally illustrates, by way of example, a food production system 300 in accordance with the present inventive concept. The dashed lines indicates parts which are optional. The food production system 300 may be seen as any type of food processing line for filling and packaging food products.

The food production system 300 comprises a packaging machine 304, also referred to as roll-fed packaging machine or filling machine. The packaging machine 304 is a roll-fed packaging machine used for producing packages. More specifically, the packaging machine 304 may be used for packaging liquid food products in carton-based packages. Already in the 1940s this type of packaging machines was introduced by Tetra Pak, and it is today a well-known approach for packaging milk and other liquid food products in a safe and cost-efficient manner. The general approach can also be used for non-liquid food products, such as potato crisps. In addition, the general approach can also be used for non-carton based packages, such as PET bottles. Thus, the packaging machine 304 may be a PET bottling system.

The packaging material is often printed and prepared in packaging material production centers, also referred to as converting factories, and is shipped to a site where the packaging machine 304 is placed, e.g. a dairy. Usually the packaging material is loaded onto a reel 302 before being transported. After arriving at the site, the reel 302 is placed in the packaging machine 304, or fed into the packaging machine 304 as illustrated in herein. Alternatively, the package material is provided as blanks to the packaging machine 304.

During production a web 303 of packaging material can be fed from the reel 302 through the packaging machine 304. Even though not illustrated in Fig. 3, the packaging material may pass through a sterilization device, e.g. a hydrogen peroxide bath or an LVEB (Low-Voltage Electron Beam) station, for ensuring that the web 303 is free from unwanted microorganisms. Before providing the food product, a tube 308 can be formed from the web 303 by forming a longitudinal sealing. The food product can be fed into the tube 308 via a filling pipe (not shown) and a valve (not shown) may be used for regulating a flow through the filling pipe. A lower end of the tube 308 can be fed into a folding device (not shown) in which a transversal sealing is made, the tube 308 is folded according to folding lines, also referred to as weakening lines, and cut off such that packages 310 can be formed.

The food production system 300 further comprises an image data capturing device 306a-c. The image data capturing device 306a-c are configured to capture image data depicting at least a portion of a package produced in the packaging machine 304. The image data capturing device 306a-c may be arranged in the packaging machine 304. However, as readily understood by the skilled person, the image data capturing device may be arranged outside of the packaging machine 304 as well. In the illustrated example, a first, a second and a third image data capturing device 306a, 306b, 306c are illustrated. These should merely be seen as non-limiting examples for illustrating that the image data depicting the package can be captured at different stages of the production process. For example, the first image data capturing device 306a shows an example where image data are captured of the package in the form of the web 303 of packaging material, i.e. prior to being formed into the tube 308. Further, the second image data capturing device 306b shows an example where image data are captured from inside of the tube 308, i.e. of the longitudinal sealing. Thus, the image data capturing device may be arranged inside the tube 308 (as indicated by the dash-dot pattern). Even though not illustrated, a product filling pipe inside the tube may be provided and the second image data capturing device 306b may be placed on the product filling pipe. Further yet, the third image data capturing device 306c shows an example where image data is captured of a finished package 310 (i.e. a package which has been filled, sealed and folded). The food production system 300 may comprise one or more image data capturing devices (e.g. any one of the first, second and third image data capturing devices 306a-c) arranged at different places of the packaging machine 304. The image data capturing device 306a-c may be any camera or other image capturing device suitable for generating image data that can be used for determining the quality measurements described herein. The image data capturing device 306a-c may comprise a light source adapted to illuminate the portion of the package which the image data is captured of. The light source may use visible light, infrared (IR) light, ultraviolet (UV) light, or any combination thereof. The light source may provide visible light at wave lengths of about 380 to 740 nanometers (nm). The light source may provide IR light at wave lengths of about 740 nm to 1 mm. The light source may provide UV light at wave lengths of about 1 to 380 nm.

The food production system 300 further comprises a quality control apparatus 200 for performing quality control of packages produced in the roll-fed packaging machine 304. The quality control apparatus 200 is a quality control apparatus 200 as described above in connection with Fig. 2. As illustrated herein, the quality control apparatus 200 may be a separate unit from the packaging machine 304 and communicatively connected thereto. Alternatively, the quality control apparatus 200 may be an integral unit of the packaging machine 304, either as part of the control system of the packaging machine 304 or communicatively connected thereto. As stated above in connection with Fig. 1 and 2, the quality control apparatus 200 can obtain image data depicting at least a portion of the package. Herein, the quality control apparatus 200 receives the image data from the packaging machine 304 or image data capturing device 306a-c through any suitable communication protocol. Optionally, identification data (ID) of the package associated with the image data may also be received. In return, the quality control apparatus 200 transmits a determined action to be performed. Optionally, the quality control apparatus 200 transmits updated settings to the packaging machine 304. The quality control apparatus 200 may also keep track of what mode the roll-fed packaging machine is in 304 (i.e. autonomous or re-training mode). Another way of putting it is that the mode may be associated with the quality control apparatus 200. I.e. if the quality control apparatus 200 is in autonomous mode, it is allowed to automatically perform the quality control. If the quality control apparatus 200 is in re-training mode, the quality control apparatus 200 re-trains the machine learning model and the quality control of the packages are performed by other means (e.g. by a secondary reject system or manual quality control).

The food production system 300 may further comprise a package reject unit 312. The package reject unit 312 may be configured to either keep or discard packages based on a quality assessment. The quality control apparatus 200 may be communicatively connected to the package reject unit 312. The quality control apparatus 200 may transmit an action of either reject or accept a package to the package reject unit 312. Identification data of the package associated with the action may further be transmitted. Based on the action, the package reject unit 312 may discard or keep the package. The rejected packages 314 may be collected by a recycling unit 316 for recycling the product of the discarded packages. The accepted packages 320 may be sent to an end station 318 of the food production system 300 where they can be collected and transported away (e.g. to a warehouse). The rejected packages 314 may be evaluated by a user (e.g. an operator) to determine if they were correctly rejected or not. This information (i.e. if a package is a false negative FN (or true negative TN)) may be sent to the quality control apparatus 200. Similarly, one or more of the accepted packages 320 may be evaluated by the used to determine if they were correctly accepted or not. This information (i.e. if a package is a false positive FP (or true positive TP)) may be sent to the quality control apparatus 200. The information about false negatives and/or false positives may be used by the quality control apparatus 200 in determining the performance metric of the machine learning model, as described above in connection with Fig. 1 and 2. The feedback from the used may further be used in labeling any image data collected for re-training the machine learning model.

Additionally, variations to the disclosed variants can be understood and effected by the skilled person in practicing the claimed invention, from a study of the drawings, the disclosure, and the appended claims.

## Claims

1. A method (100) for quality control of packages produced in a roll-fed packaging machine, the method (100) comprising a series of recurring steps, said series of recurring steps comprising:
obtaining (S102), from an image data capturing device, image data depicting at least a portion of a package;
in response to the roll-fed packaging machine being in an autonomous mode:
determining (S106) a quality measurement of the package by inputting the image data into a machine learning model;
determining (S108) an action to be performed, based on the determined quality measurement;
communicating (S110) the action to a control system of the roll-fed packaging machine;
determining (S112) a performance metric of the machine learning model based on the quality measurement of the package and quality measurements of previously assessed packages; and
assigning (S114) the mode of the roll-fed packaging machine to a re-training mode if the performance metric is outside a performance metric interval;
in response to the roll-fed packaging machine being in the re-training mode:
collecting (S116) the image data as training data for the machine learning model,
re-training (S118) the machine learning model using the training data, and
assigning (S120) the mode of the roll-fed packaging machine to the autonomous mode.

2. The method (100) according to claim 1, wherein the package comprises a carton layer and at least one plastic layer.

3. The method according to claim 1 or 2, wherein the image data depicts a longitudinal sealing of the package, and wherein the determined quality measurement is a quality measurement of the longitudinal sealing.

4. The method (100) according to claim 3, wherein the longitudinal sealing is formed by forming a tube of a web of packaging material such that a first longitudinal edge section of the web overlaps a second longitudinal edge section of the web, attaching the first and second longitudinal edge sections, and applying a protective strip to the overlap between the first and second longitudinal edge sections on an inside of the tube, and
wherein the image data of the longitudinal sealing is captured by the image data capturing device from the inside of the tube.

5. The method according to any of the claims 1-4, wherein the action is any one of (i) rejecting or accepting the package, (ii) sending a warning signal to an operator of the packaging machine, (iii) stopping the packaging machine and (iv) adjusting settings of the packaging machine.

6. The method according to any of the claims 1-5, wherein the action is to accept or reject the package, and wherein communicating (S110) the action comprises communicating the action to a package reject unit arranged downstream of the packaging machine.

7. The method (100) according to any of claims 1-6, wherein the action is to accept or reject the package, and when the roll-fed packaging machine is in the re-training mode, the method (100) further comprises:
instructing (S122) a secondary reject system to perform a quality assessment of the package.

8. The method (100) according to any of claims 1-7, wherein the performance metric is determined (S112) based on a number of false positives and a number of false negatives of previously assessed packages.

9. The method (100) according to any of claims 1-8, wherein the method (100) further comprises adjusting (S124) settings of the roll-fed packaging machine based on the determined quality measurement, preferably by increasing or decreasing a heating temperature and/or increasing or decreasing an electricity amount during a forming of the longitudinal sealing.

10. The method (100) according to any of claims 1-9, wherein the image data is associated with identification data of the package, and
wherein communicating (S110) the action to the control system further comprises communicating the identification data to the control system.

11. The method (100) according to any of claims 1 - 10, wherein the mode of the roll-fed packaging machine is assigned (114) to the re-training mode if the performance metric deteriorate over a number of consecutively assessed packages.

12. The method (100) according to any of claims 1 - 11, wherein the performance metric comprises a number of sub-metrics, and wherein the method (100) further comprises:
in response to a sub-metric being outside a corresponding sub-metric interval:
generating a task associated with the sub-metric, wherein the task comprises the image data and settings of the roll-fed packaging machine, and
sending the task to a user group associated with the sub-metric;
receiving, in response to said task, from the user group, updated settings for the roll-fed packaging machine, and
adjusting the settings of the roll-fed packaging machine in accordance with the updated settings.

13. A quality control apparatus (200) for quality control of packages produced in a roll-fed packaging machine, the quality control apparatus (200) comprising circuitry (202) configured to execute:
an obtaining function (210) configured to obtain, from an image data capturing device, image data depicting at least a portion of a package;
in response to the roll-fed packaging machine being in an autonomous mode, the circuitry (202) is further configured to execute:
a first determining function (212) configured to determine a quality measurement of the package by inputting the image data into a machine learning model, such as a neural network;
a second determining function (214) configured to determine an action to be performed, based on the quality measurement,
a communication function (216) configured to communicate the action to a control system of the roll-fed packaging machine,
a third determining function (218) configured to determine a performance metric of the machine learning model based on the quality measurement of the package and quality measurements of previously assessed packages, and,
a first assigning function (220) configured to assign the mode of the roll-fed packaging machine to a re-training mode if the performance metric is outside a performance metric interval;
in response to the roll-fed packaging machine being in the re-training mode, the circuitry (202) is further configured to execute:
a re-training function (222) configured to collect the image data as training data for the machine learning model and re-training the machine learning model using the training data, and
a second assigning function (224) configured to assign the mode of the roll-fed packaging machine to the autonomous mode.

14. A food production system (300), the food production system (300) comprising:
a roll-fed packaging machine (304) configured to produce the packages (310);
an image data capturing device (306a-c) arranged in the roll-fed packaging machine (304) to capture image data depicting at least a portion of a package; and
a quality control apparatus (200) for quality control of packages produced in the roll-fed packaging machine according to claim 13.

15. A non-transitory computer-readable storage medium storing one or more programs configured to be executed by one or more processors of a processing system, the one or more programs comprising instructions for performing the method (100) according to any one of claims 1 - 12.
